**Europäisches Patentamt**

**European Patent Office**

**Office européen des brevets**

(19)

(11) Veröffentlichungsnummer: **0 150 376**
**B1**

(12) # EUROPÄISCHE PATENTSCHRIFT

(45) Veröffentlichungstag der Patentschrift:
**22.06.88**

(51) Int. Cl.⁴: **H 04 M 1/02**

(21) Anmeldenummer: **84115150.9**

(22) Anmeldetag: **11.12.84**

(54) **Station zur Aufnahme eines aufladbaren, schnurlosen Telefons.**

(30) Priorität: **05.01.84 DE 3400294**

(43) Veröffentlichungstag der Anmeldung:
**07.08.85 Patentblatt 85/32**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**FR - A - 1 432 760**
**US - A - 3 657 487**

**JAPAN TELECOMMUNICATIONS REVIEW, Band 12, Nr. 2, April 1970, Seiten 113-121, Tokyo, JP; TORU UEHARA u.a.: "Wireless telephone system at EXPO'70"**

(73) Patentinhaber: **Siemens Aktiengesellschaft Berlin und München, Wittelsbacherplatz 2, D-8000 München 2 (DE)**

(72) Erfinder: **Grassl, Erwin,, Drygalski-Allee 111, D-8000 München 71 (DE)**
Erfinder: **Wächtler, Rudolf, Dr.-Ing., Plattlinger Strasse 57, D-8000 München 71 (DE)**

ACTORUM AG

## Beschreibung

Die Erfindung betrifft eine ortsfeste Station als Basisteil für ein ortsunabhängiges schnurloses Telefon, mit einer wannenartigen, der Form des Telefons angepassten Mulde, wobei das schnurlose Telefon eine Kassette mit der elektrischen Versorgung dienenden, aufladbaren Batterien enthält, die bei in die Mulde eingelegtem Telefon durch in der Station angeordnete Ladeeinrichtungen, durch die auch separate Batterien ladbar sind, aufgeladen werden.

Eine derartige Station, ist durch die Zeitschrift «JAPAN TELECOMMUNICATIONS REVIEW», Bd 12, Nr. 2, April 1970, Seiten 113–121 bekannt.

Das Basisteil stellt dabei eine ans Fernsprechnetz und an eine Stromversorgung angeschlossene Station dar. Das schnurlose Telefon und das Basisteil sind mittels modulierbarer elektromagnetischer Wellen verbunden. Das schnurlose Telefon ist in seiner freien Beweglichkeit und Benutzbarkeit im wesentlichen von der Reichweite der Verbindung mit dem Basisteil unabhängig.

Für die drahtlose Verbindung sind beide Geräte jeweils mit Sende- und Empfangseinrichtung ausgestattet, die im Basisteil vom vorgesehenen Netzanschlus im schnurlosen Telefon von den aufladbaren Batterien gespeist werden.

Als Einrichtungen für das Aufladen der Batterien enthält das Basisteil ein Ladegerät und in der Mulde zugängliche Ladekontakte, an denen Kontaktflächen der die Batterien enthaltenden Kassette zur Anlage bringbar sind.

Wenn das schnurlose Telefon jeweils in den gesprächsfreien Intervallen in die Mulde des Basisteils eingelegt wird, dürften diese Intervalle bei normaler Benutzungshäufigkeit ausreichen, um die Batterien betriebsfähig geladen zu halten.

Als optimale Nutzung eines schnurlosen Telefons kann man jedoch eine noch weitergehende Unabhängigkeit vom Basisteil verlangen. Man kann z.B. den Wunsch haben, täglich mehrere Stunden lang z.B. an beliebigen, nicht vorher bestimmbaren Plätzen einer Baustelle telefonisch erreichbar zu sein und auch jederzeit selbst von diesen Plätzen aus Verbindungen herstellen zu können. Man möchte dazu das schnurlose Telefon in der Tasche mit sich führen.

In diesem Fall kann die für das Aufladen der Batterien verfügbare Zeit unter Umständen zu knapp werden, da das Telefon in den Sprechpausen nicht jedesmal zum Aufladen der Batterien in das Basisteil einlegbar ist, und bei ungenügender Batterieladung seine Betriebsfähigkeit verliert. Der eingangs genannte Artikel schlägt deshalb vor, dass die Ladeeinrichtung auch separate Batterien laden kann.

Der Erfindung liegt die Aufgabe zugrunde, die Unabhängigkeit des schnurlosen Telefons vom Basisteil zu verbessern im Hinblick auf eine Verkürzung der notwendigen Zeit zum Wechseln der Batterien.

Diese Aufgabe ist nach der Erfindung dadurch gelöst, das an der Station eine weitere wannenförmige Ausnehmung vorgesehen ist, die zur Aufnahme und zum Laden von weiteren Reservebatterien dient, die in einer den Konturen der Kassette des schnurlosen Telefons entsprechenden weiteren separaten Kassette angeordnet sind.

Eine separate Kassette kann nun unabhängig vom schnurlosen Telefon jederzeit in der Ausnehmung der Station enthalten und der Einwirkung des Ladegeräts ausgesetzt sein. Um die Betriebsfähigkeit des schnurlosen Telefons zu erhalten, genügt es, von Zeit zu Zeit einen Kassettenwechsel vorzunehmen. Die in der zusätzlichen Ausnehmung des Basisteils enthaltene Batteriekassette stellt jeweils eine Reservekassette dar.

Nach einer vorteilhaften Weiterbildung der Erfindung kann die Ausnehmung für die weitere separate Reservekassette als Teil der Mulde für das schnurlose Telefon, an deren Grundfläche ausgebildet sein. Die Reservekassette ist dann in ihrer Ausnehmung nur zugänglich, wenn das schnurlose Telefon nicht in die Mulde eingelegt ist. Sind das schnurlose Telefon und die Reservekassette in Mulde bzw. Ausnehmung des Basisteils aufgenommen, so unterliegen die Batterien in beiden Kassetten dem Einfluss des Ladegerätes.

Nach einer anderen vorteilhaften Weiterbildung der Erfindung kann am Basisteil ein elastischer Steg in Zuordnung zu den in der Mulde vorgesehenen Ladekontakten angeordnet sein, der mit einer Nase in eine umlaufende Trennfuge des in die Mulde des Basisteils eingelegten schnurlosen Telefons eingreift und das Telefon mit den Kontaktflächen der Batteriekassette gegen die Ladekontakte in der Mulde des Basisteils gedrückt hält.

Die Erfindung sei im folgenden anhand eines in den Figuren dargestellten Ausführungsbeispiels näher erläutert. Es zeigen:

Fig. 1 ein schnurloses Telefon, eingelegt in eine an einem Basisteil vorgesehene Mulde, in teilweise geschnittener Seitenansicht,

Fig. 2 eine Draufsicht auf das Basisteil, bei abgenommenem schnurlosen Telefon.

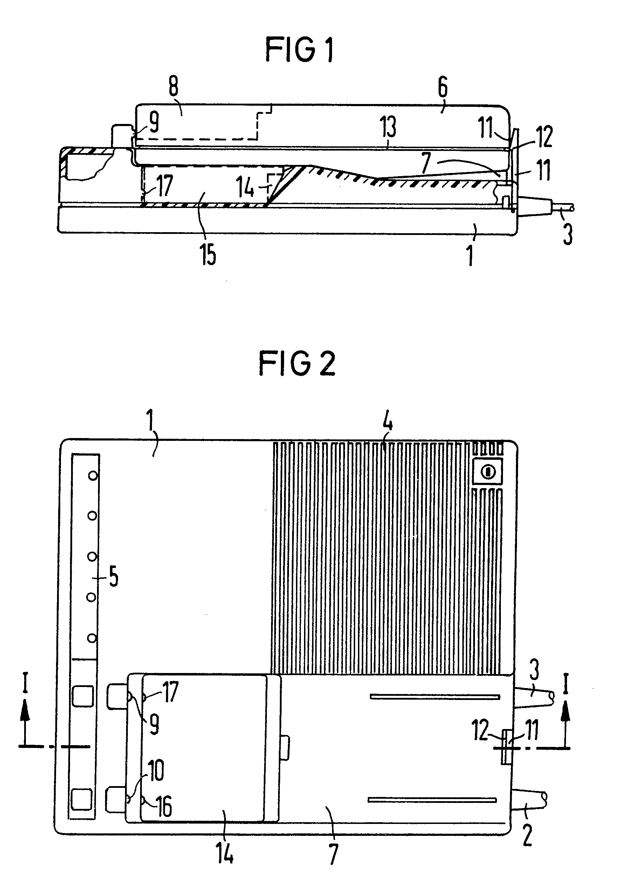

Das Basisteil 1 für das schnurlose Telefon 6 ist mit Anschlussschnüren 2, 3 für die Verbindung mit dem Fernsprechnetz und einer Energieversorgung versehen und stellt eine komplette Fernsprechstation dar. Die obere Gehäusefläche des Basisteils ist mit einem Schallgitter 4 für den Ein- und Austritt akustischer Signale, mit Anzeige- und Betätigungselementen 5 und mit einer dem schnurlosen Telefon formmässig angepassten Mulde 7 ausgestattet.

Das schnurlose Telefon 6 stellt ebenfalls einen kompletten, als Handsprechhörer gestalteten Fernsprecher dar, ist mit dem Basisteil über elektromagnetische Wellen verbindbar und enthält unter anderem eine Kassette 8, in der der Speisung dienende, aufladbare Batterien aufgenommen sind.

Diese Kassette 8 besitzt aussen zugängliche Kontaktflächen, die bei in die Mulde 7 eingelegtem Telefon 6 mit entsprechenden, am Basisteil 1 vorgesehenen Ladekontakten 9, 10 korrespondieren.

Das Basisteil 1 weist weiterhin einen elastischen Steg 11 auf, der mit einer Nase 12 in eine umlaufende Trennfuge 13 am Rand des in der Mulde 7 des Basisteils 1 aufgenommenen schnurlosen Telefons 6 eingreift. Das Telefon wird dadurch in Längsrichtung gegen die Ladekontakte 9, 10 des Basisteils gedrückt und gegen unbeabsichtigtes Lösen aus der Mulde, senkrecht zu seiner Längsrichtung gesichert.

Am Basisteil 1 ist als Teil der für das schnurlose Telefon vorgesehenen Mulde 7 eine zusätzliche Ausnehmung 14 vorgesehen, die der Form der Kassette 8 angepasst ist und in die eine weitere, aufladbare Batterien enthaltende, der Form der Kassette 8 entsprechende, separate Kassette 15 eingelegt ist. Die Kontaktflächen dieser Kassette 15 korrespondieren dabei mit in der Ausnehmung 14 vorgesehenen Ladekontakten 16, 17 des Basisteils.

## Patentansprüche

1. Ortsfeste Station (1) als Basisteil für ein ortsunabhängiges schnurloses Telefon (6), mit einer wannenartigen, der Form des Telefons angepassten Mulde (7), wobei das schnurlose Telefon eine Kassette (8) mit der elektrischen Versorgung dienenden, aufladbaren Batterien enthält, die bei in die Mulde (7) eingelegtem Telefon durch in der Station angeordnete Ladeeinrichtungen (9, 10), durch die auch separate Batterien ladbar sind, aufgeladen werden, dadurch gekennzeichnet, dass an der Station (1) eine weitere wannenförmige Ausnehmung (14) vorgesehen ist, die zur Aufnahme und zum Laden von weiteren Reservebatterien dient, die in einer den Konturen der Kassette (8) des schnurlosen Telefons entsprechenden weiteren separaten Kassette (15) angeordnet sind.

2. Ortsfeste Station nach Anspruch 1, dadurch gekennzeichnet, dass die Ausnehmung (14) für die weitere separate Kassette (15) als Teil der Mulde (7) für das schnurlose Telefon (6) ausgebildet ist.

3. Ortsfeste Station nach Anspruch 1 oder 2, dadurch gekennzeichnet, dass an der Station (1) ein elastischer Steg (11) angeordnet ist, der mit einer Nase (12) in eine umlaufende Trennfuge (13) des in die Mulde (7) der Station eingelegten, schnurlosen Telefons (6) eingreift.

## Revendications

1. Poste fixe (1) formant unité de base pour un téléphone mobile sans fil (6), comportant une cavité en forme de cuvette (7) adaptée à la forme du téléphone, le téléphone sans fil contenant une cassette (8) munie de piles rechargeables servant à réaliser l'alimentation électrique et qui, lorsque le téléphone est inséré dans la cavité (7), sont chargées par des dispositifs de charge (9, 10) situés dans le poste et à l'aide desquels des piles séparées peuvent également être chargées, caractérisé par le fait que dans le poste (1) il est prévu un autre évidement en forme de cuvette (14), qui sert à recevoir et charger d'autres piles de réserve, qui sont disposées dans une autre cassette séparée (15) qui correspond aux contours de la cassette (8) du téléphone sans fil.

2. Poste fixe suivant la revendication 1, caractérisé par le fait que l'évidement (14) pour l'autre cassette séparée (15) est réalisé sous la forme d'une partie de la cavité (7) prévue pour le téléphone sans fil (6).

3. Poste fixe suivant la revendication 1 ou 2, caractérisé par le fait que sur le poste (1) se trouve disposée une barrette élastique (11) qui s'engage par un bec (12) dans un joint de séparation périphérique (13) du téléphone sans fil (6) inséré dans la cavité (7) du poste.

## Claims

1. An immobile station (1) as a base portion for a mobile cordless telephone (6), with a trough-like depression (7) matching the shape of the telephone, the cordless telephone including a cartridge (8) with rechargeable batteries serving as the electric power supply, these batteries, when the telephone is laid in the depression (7), being charged by charging means (9, 10) arranged in the station, by which means separate batteries can also be charged, characterised in that a further trough-shaped recess (14) is provided in the station (1), which serves for reception and charging of further, reserve batteries, which are arranged in a further, separate cartridge (15) corresponding to the shape of the cartridge (8) of the cordless telephone.

2. An immobile station according to claim 1, characterised in that the recess (14) for the further, separate cartridge (15) is formed as part of the depression (7) for the cordless telephone (6).

3. An immobile station according to claim 1 or claim 2, characterised in that a resilient tongue (11) is arranged on the station (1), which engages by means of a nose (12) in a circumferential joint (13) of the cordless telephone (6), when it is laid in the depression (7) of the station.

## FIG 1

## FIG 2